(19) Europäisches Patentamt
European Patent Office
Office européen des brevets

(11) EP 0 869 149 B1

(12) **EUROPÄISCHE PATENTSCHRIFT**

(45) Veröffentlichungstag und Bekanntmachung des Hinweises auf die Patenterteilung:
**04.06.2003 Patentblatt 2003/23**

(51) Int Cl.[7]: **C08L 69/00**
// (C08L69/00, 25:12, 55:02)

(21) Anmeldenummer: **98104997.6**

(22) Anmeldetag: **19.03.1998**

(54) **Polycarbonat/Pfropfpolymerisat-Formmassen mit reduzierter Belagsbildung**

Polycarbonate/graft polymer moulding composition showing reduced plate out

Composition de moulage à base de polycarbonate et de polymère greffé ayant une tendance réduite à déposer

(84) Benannte Vertragsstaaten:
**BE DE ES FR GB IT NL**

(30) Priorität: **01.04.1997 DE 19713508**

(43) Veröffentlichungstag der Anmeldung:
**07.10.1998 Patentblatt 1998/41**

(73) Patentinhaber: **BAYER AG**
**51368 Leverkusen (DE)**

(72) Erfinder:
- **Eckel, Thomas, Dr.**
  **41540 Dormagen (DE)**
- **Wittmann, Dieter, Dr.**
  **51375 Leverkusen (DE)**
- **Alberts, Heinrich, Dr.**
  **51519 Odenthal (DE)**
- **Sarabi, Bahman, Dr.**
  **47803 Krefeld (DE)**
- **Eichenauer, Herbert, Dr.**
  **41539 Dormagen (DE)**
- **Leitz, Edgar, Dr.**
  **41541 Dormagen (DE)**

(56) Entgegenhaltungen:
**EP-A- 0 700 968**
**FR-A- 2 371 486**
**US-A- 4 068 064**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 869 149 B1

**Beschreibung**

Die vorliegende Erfindung betrifft thermoplastische Polycarbonat/Pfropfpolymerisat-Formmassen mit verminderter Tendenz der Additive zum Ausschwitzen aus der Thermoplastmasse bei Verarbeitung und reduziertem Belagsaufbau im Werkzeug.

Polycarbonat/Pfropfpolymerisat-Formmassen sind Mehrphasenkunststoffe aus

I. einem thermoplastischen Polycarbonat,

II. einem thermoplastischen Copolymerisat aus Styrol und Acrylnitril, in dem das Styrol ganz oder teilweise durch andere Monomere wie z.B. α-Methylstyrol oder Methylmethacrylat ersetzt werden kann, und

III. mindestens einem Pfropfpolymerisat, welches hergestellt worden ist durch Pfropfreaktion eines oder mehrerer der unter II. genannten Monomeren auf Butadien-Homo- oder Copolymerisate ("Pfropfgrundlage"). Dieses Pfropfpolymerisat ("Elastomerphase" oder "Pfropfkautschuk") bildet die disperse Phase in der Matrix.

Ein wichtiger Punkt bei der Herstellung von glänzenden Formteilen aus diesen Formmassen ist die zunehmende Forderung des Marktes nach Belagsfreiheit im Werkzeug (z.B. Möglichkeit der vollautomatischen Kunststoffverarbeitung zu Formteilen durch Spritzgießautomaten) sowie die bei Hochglanz-Anwendungen notwendige sichere Vermeidung von Flecken oder Streifen auf den Formteilen durch austretende flüssige bzw. niederviskose Bestandteile. Ebenso dürfen sich bei genarbten Werkzeugen keine Beläge in der Narbung festsetzen und zu einer ungenügenden Abbildung auf den Formteilen führen. Andererseits müssen die Polycarbonat/Pfropfpolymerisat- (insbesondere vom ABS-Typ) Formmassen optimale Eigenschaften, insbesondere im Hinblick auf thermoplastische Verarbeitbarkeit, Zähigkeit oder Flammschutz aufweisen, was oft nur durch Zusatz spezieller in vielen Fällen flüssiger Additive sichergestellt werden kann.

Es bestand daher die Aufgabe, Polycarbonat/Pfropfpolymerisat- (insbesondere vom ABS-Typ) Formmassen mit sehr guten verarbeitungstechnischen Eigenschaften ohne das Auftreten einer Belagsbildung bei der thermoplastischen Verarbeitung bereitzustellen.

Es wurde nun gefunden, daß die beschriebenen Anforderungen erfüllt werden, wenn die Polycarbonat/Pfropfpolymerisat-Formmassen aus bestimmten Komponenten aufgebaut sind und bestimmte Randbedingungen eingehalten werden.

Gegenstand der Erfindung ist eine thermoplastische Polycarbonat/Pfropfpolymerisat-Formmasse enthaltend

A) 5 bis 95 Gew.-Teile, vorzugsweise 10 bis 90 Gew.-Teile, besonders bevorzugt 20 bis 80 Gew.-Teile aromatisches Polycarbonat,

B) 1 bis 50 Gew.-Teile, bevorzugt 1 bis 40 Gew.-Teile und besonders bevorzugt 1 bis 30 Gew.-Teile, mindestens eines thermoplastischen Homo-, Co- oder Terpolymerisats von Styrol, α-Methylstyrol, Acrylnitril, N-substituiertem Maleinimid oder Mischungen daraus,

C) 1 bis 50 Gew.-Teile, bevorzugt 2 bis 40 Gew.-Teile mindestens eines Pfropfpolymerisats von

C.1) 5 bis 90 Gew.-Teilen, vorzugsweise 30 bis 80 Gew.-Teilen, Styrol, α-Methylstyrol, Acrylnitril, N-substituiertem Maleinimid oder Mischungen daraus auf

C.2) 95 bis 10 Gew.-Teile, vorzugsweise 70 bis 20 Gew.-Teile, eines Kautschuks mit einer Glasübergangstemperatur ≤0°C und

D) 1 bis 25 Gew.-Teile, vorzugsweise 2 bis 20 Gew.-Teile und besonders bevorzugt 3 bis 15 Gew.-Teile (jeweils pro 100 Gew.-Teile A+B+C) mindestens eines Additivs ausgewählt aus der Gruppe der Flammschutzmittel, Gleitmittel, Antistatika, Entformungsmittel oder Mischungen daraus,

dadurch gekennzeichnet, daß die Komponente B) durch Masse-, Lösungs- oder Suspensionspolymerisation hergestellt wird und einen Oligomerengehalt (Dimere, Trimere, Tetramere) ≤ 1 Gew.-%, vorzugsweise ≤ 0,75 Gew.-% und besonders bevorzugt ≤ 0,5 Gew.-% aufweist, Komponente C) durch Emulsionspolymerisation hergestellt wird und der Gesamtoligomerengehalt (Dimere, Trimere, Tetramere) der Formmasse ≤ 0,6 Gew.-%, vorzugsweise ≤ 0,4 Gew.-% und besonders bevorzugt 0,3 Gew.-% beträgt.

Unter Gesamtoligomerengehalt ist der Oligomergehalt zu verstehen, der sich aus Komponente B) und C)

ergibt.

Erfindungsgemäß geeignete, thermoplastische, aromatische Polycarbonate gemäß Komponente A) sind solche auf Basis der Diphenole der Formel (I)

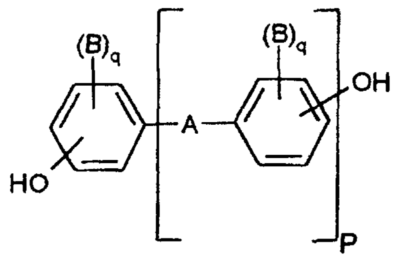

(I),

worin

A eine Einfachbindung, $C_1$-$C_5$-Alkylen, $C_2$-$C_5$-Alkyliden, $C_5$-$C_6$-Cycloalkyliden, -S- oder -$SO_2$-,

B Chlor, Brom,

q 0, 1 oder 2 und

p 1 oder 0 sind

oder alkylsubstituierte Dihydroxyphenylcycloalkane der Formel (II),

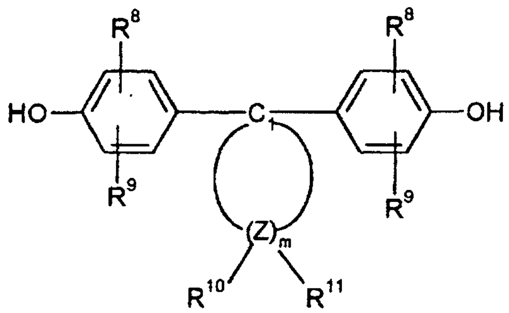

(II),

worin

$R^8$ und $R^9$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4, 5, 6 oder 7, bevorzugt 4 oder 5,

$R^{10}$ und $R^{11}$ fiir jedes Z individuell wählbar, unabhängig voneinander Wasserstoff oder $C_1$-$C_6$-Alkyl

und

Z Kohlenstoff bedeuten, mit der Maßgabe, daß an mindestens einem Atom Z $R^{10}$ und $R^{11}$ gleichzeitig Alkyl bedeuten.

Geeignete Diphenole der Formel (I) sind z.B. Hydrochinon, Resorcin, 4,4-Dihydroxydiphenyl, 2,2-Bis-(4-hydroxyphenyl)-propan, 2,4-Bis-(4-hydroxyphenyl)-2-methylbutan, 1,1-Bis-(4-hydorxyphenyl)-cyclohexan, 2,2-Bis-(3-chlor-4-hydroxyphenyl)-propan, 2,2-Bis-(3,5-dibrom-4-hydroxyphenyl)-propan.

Bevorzugte Diphenole der Formel (I) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.

Bevorzugte Diphenole der Formel (II) sind 1,1-Bis-(4-hydroxyphenyl)-3,3-dimethylcyclohexan, 1,1-Bis-(4-hydroxyphenyl-3,3,5-trimethylcyclohexan und 1,1-Bis-(4-hyroxyphenyl)-2,4,4-trimethyl-cyclopentan.

Erfindungsgemäß geeignete Polycarbonate sind sowohl Homopolycarbonate als auch Copolycarbonate.

Komponente A) kann auch eine Mischung der vorstehend definierten thermoplastischen Polycarbonate sein.

Polycarbonate können in bekannter Weise aus Diphenolen mit Phosgen nach dem Phasengrenzflächenverfahren oder mit Phosgen nach dem Verfahren in homogener Phase, dem sogenannten Pyridinverfahren, hergestellt werden, wobei das Molekulargewicht in bekannter Weise durch eine entsprechende Menge an bekannten Kettenabbrechern eingestellt werden kann.

Geeignete Kettenabbrecher sind z.B. Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 (Le A 19 006) oder Monoalkylphenol bzw. Dialkylphenol mit insgesamt 8 bis 20 C-Atomen in den Alkylsubstituenten gemäß deutscher Patentanmeldung P 3 506 472.2 (Le A 23 654), wie 3,5-di-tert.-Butylphenol, p-iso-Octylphenol), p-tert.-Octylphenol, p-Dodecylphenol und 2-(3,5-Dimethylheptyl)-phenol und 4-(3,5-Dimethyl-heptyl)-phenol.

Die Menge an Kettenabbrechern beträgt im allgemeinen zwischen 0,5 und 10 Mol-%, bezogen auf die Summe der jeweils eingesetzten Diphenole der Formeln (I) und/oder (II).

Die erfindungsgemäß geeigneten Polycarbonate A) haben mittlere Molekulargewichte ($\overline{M}_w$, Gewichtsmittel, gemessen z.B. durch Ultrazentrifugation oder Streulichtmessung) von 10 000 bis 200 000, vorzugsweise 20 000 bis 80 000.

Die erfindungsgemäß geeigneten Polycarbonate A) können in bekannter Weise verzweigt sein, und zwar vorzugsweise durch den Einbau von 0,05 bis 2 Mol-%, bezogen auf die Summe der eingesetzten Diphenole, an drei- oder mehr als dreifünktionellen Verbindungen, z.B. solchen mit drei oder mehr als drei phenolischen Gruppen.

Bevorzugte Polycarbonate sind neben dem Bisphenol-A-Homopolycarbonat die Copolycarbonate von Bisphenol A mit bis zu 15 Mol-%, bezogen auf die Mol-Summen an Diphenolen, an 2,2-Bis-(3,5-dibrom-4-hydroxyphenyl)-propan und die Copolycarbonate von Bisphenol A mit bis zu 60 Mol-%, bezogen auf die Mol-Summen an Diphenolen, 1,1-Bis-(4-hydroxyphenyl)-3,3,5-trimethyl-cyclohexan.

Bevorzugte Polycarbonate können auch Copolycarbonate mit Polysiloxan-Strukturen sein.

Erfindungsgemäß geeignete Polymerisate B) sind harzartige, thermoplastische und kautschukfreie Produkte aus Styrol, α-Methylstyrol, Acrylnitril, N-substituiertem Maleinimid oder Mischungen daraus mit einem Oligomerengehalt von ≤ 1 Gew.-%, vorzugsweise ≤ 0,75 Gew.-% und besonders bevorzugt ≤ 0,5 Gew.-%, die durch Masse-, Lösungs- oder Suspensionspolymerisation und nicht durch Emulsionspolymerisation hergestellt werden.

Bevorzugte Polymerisate sind solche aus Styrol/Acrylnitril-Gemischen, α-Methylstyrol/Acrylnitril-Gemischen, Styrol/α-Methylstyrol/Acrylnitril-Gemischen,Styrol/N-Phenylmaleinimid-Gemischen,Styrol/Acrylnitril/N-Phenylmaleinimid-Gemischen.

Besonders bevorzugte Polymerisate sind Styrof/Acrylnitril-Copolymerisate und α-Methylstyrol/Acrylnitril-Copolymerisate.

Derartige Polymerharze sind bekannt. Dabei muß die Herstellung dieser Harze so erfolgen, daß der geforderte Oligomerengehalt nicht überschritten wird. Üblicherweise entstehen beim technisch am häufigsten benutzten Verfahren der thermischen Lösungs- oder Massepolymerisation Oligomere aus vorzugsweise 2 bis 4 Monomereinheiten (vgl. hierzu K. Kirchner und H. Schlapkohl in Makromol. Chem. 177 (1976), S. 2031-2042 : The Formation of Oligomers in the Thermal Copolymerisation of the Styrene/Acrylonitrile-System), zur Vermeidung einer solchen Oligomerenbildung müssen spezielle Reaktionsbedingungen (Einsatz bestimmter Initiatoren wie beispielsweise Di-tert.-butylperoxid, 1,1-Bis(tert-butylperoxy)-cyclohexan, Benzoylperoxid oder Azobisisobutyronitril) angewandt werden. Solche Prozesse sind bekannt (vgl. z.B. US-PS 4 068 064).

Die Herstellung der erfindungsgemäß geeigneten Polymerisate B) erfolgt demzufolge bevorzugt durch Masse-, Lösungs- oder Suspensionspolymerisation unter Verwendung organischer Radikalinitiatoren und Einhaltung sonstiger gegebenenfalls zur Erzielung der niedrigen Oligomerengehalte notwendiger Reaktionsbedingungen (vgl. z.B. US-P 4 068 064).

Eine prinzipielle weitere Möglichkeit zur Herstellung der erfindungsgemäß geeigneten Polymerisate B) besteht darin, oligomerenhaltige Harze durch Entgasungsschritte (z.B. in der Schmelze) auf den geforderten Oligomerengehalt zu bringen; dieses Verfahren ist allerdings relativ aufwendig.

Die Messung des Oligomerengehaltes kann durch gängige Methoden erfolgen; am gebräuchlichsten ist die Ermittlung durch Gaschromatographie oder durch Gelpermeationschromatographie.

Die Harzkomponenten B) besitzen vorzugsweise mittlere Molekulargewichte $\overline{M}_w$ von 20 000 bis 200 000 bzw. Grenzviskositäten [η] von 20 bis 110 ml/g (gemessen in Dimethylformamid bei 25°C).

Zur Herstellung der Pfropfpolymerisate C) geeignete Kautschuke sind insbesondere Polybutadien, Butadien/Styrol-Copolymerisate, Butadien/ Acrylnitril-Copolymerisate, Polyisopren, Alkylacrylatkautschuke auf der Basis von

$C_1$-$C_8$-Alkylacrylaten, insbesondere Ethyl-, Butyl- und Ethylhexylacrylat, Ethylen-Propylen-Dienkautschuke oder Silikonkautschuke.

Die Alkylacrylatkautschuke können gegebenenfalls bis zu 30 Gew.-% (bezogen auf Kautschukgewicht) Monomere wie Vinylacetat, Acrylnitril, Styrol, Methylmethacrylat und/oder Vinylether copolymerisiert enthalten. Sie können auch kleinere Mengen, vorzugsweise bis zu 5 Gew.-% (bezogen auf Kautschukgewicht) vernetzend wirkender ethylenisch ungesättigter Monomerer einpolymerisiert enthalten. Vernetzer sind z.B. Alkylendioldiacrylate, Alkylendioldimethacrylate, Polyesterdiacrylate, und Polyesterdimethacrylate, Divinylbenzol, Trivinylbenzol, Triallylcyanurat, Allylacrylat und Allylmethacrylat, Butadien oder Isopren.

Acrylatkautschuke als Pfropfgrundlage können auch einen vernetzten Dienkautschuk aus einem oder mehreren konjugierten Dienen, wie Polybutadien, oder ein Copolymerisat eines konjugierten Diens mit einem ethylenisch ungesättigten Monomer wie Styrol und/oder Acrylnitril, als Kern enthalten.

Bevorzugte Kautschuke zur Herstellung der Pfropfpolymerisate C) sind Dien- und Alkylacrylatkautschuke. Besonders bevorzugt sind Polybutadien und Copolymerisate aus Butadien und Styrol sowie aus Butadien und Acrylnitril.

Die Kautschuke liegen im Pfropfpolymerisat C) in Form wenigstens partiell vernetzter Teilchen eines mittleren Teilchendurchmessers von ($d_{50}$) 0,05 bis 0,60 µm bevorzugt von 0,08 bis 0,50 µm und besonders bevorzugt 0,1 bis 0,45 µm vor.

Der mittlere Teilchendurchmesser $d_{50}$ wird ermittelt durch Ultrazentrifügenmessungen nach W. Scholtan et al., Kolloid-Z. u. Z. Polymere <u>250</u> (1972 ), 782-796.

Die Pfropfpolymerisate C) werden durch radikalische Emulsionspfropfpolymerisation der Monomeren C.1) in Gegenwart der in Emulsionsform vorliegenden zu pfropfenden Kautschuke C.2) hergestellt.

Als erfindungsgemäß einzusetzende Additive D) kommen Flammschutzmittel Gleitmittel, Antistatika und Entformungsmittel in Frage; diese Additive spielen bei der Erzielung guter Oberflächenqualitäten eine wichtige Rolle. Dabei werden diese Additive in Mengen von 1 bis 25 Gew.-Teile, vorzugsweise 2 bis 20 Gew.-Teile und besonders bevorzugt 3 bis 15 Gew.-Teile (jeweils bezogen auf 100 Gew.-Teile A+B+C) eingesetzt.

Beispiele für Flammschutzmittel sind sowohl halogenhaltige als auch halogenfreie Verbindungen.

Geeignete Halogenverbindungen sind organische Chlor- und/oder Bromverbindungen, die bei der Herstellung und Verarbeitung der erfindungsgemäßen Formmassen stabil sind, so daß keine korrosiven Gase freigesetzt werden und die Wirksamkeit dadurch nicht beeinträchtigt wird.

Halogenhaltige Flammschutzmittel sind beispielsweise

1. Chlorierte und bromierte Diphenyle, wie Octachlordiphenyl, Decachlordiphenyl, Octabromdiphenyl, Decabromdiphenyl.

2. Chlorierte und bromierte Diphenylether, wie Octa- und Decachlordiphenylether und Octa- und Decabromdiphenylether.

3. Chloriertes und bromiertes Phthalsäureanhydrid und seine Derivate, wie Phthalimide und Bisphthalimide, z.B. Tetrachlor- und Tetrabromphthal-säureanhydrid, Tetrachlor- und Tetrabromphthalimid, N,N'-Ethylen-bis-tetrachlorund N,N'-Ethylen-bis-tetrabromphthalimid, N-Methyltetrachlor- und N-Methyltetrabromphthalimid.

4. Chlorierte und bromierte Bisphenole, wie 2,2-Bis-(3,5-di-chlor-4-hydroxyphenyl)-propan und 2,2-Bis-(3,5-dibrom-4-hydroxyphenyl)-propan.

5. 2,2-Bis-(3,5-di-chlor-4-hydroxyphenyl)-propan-Oligocarbonat und 2,2-Bis-(3,5-di-brom-4-hydroxyphenyl)-propan-Oligocarbonat mit einem mittleren Polykondensationsgrad von 2 bis 20.

Bromverbindungen werden gegenüber den Chlorverbindungen bevorzugt. Bevorzugt sind halogenfreie Flammschutzmittel.

Vorzugsweise als Flammschutzmittel geeignet sind alle üblicherweise hierfür verwendeten Phosphorverbindungen, insbesondere Phosphinoxide und Derivate von Säuren des Phosphors und Salze von Säuren und Säurederivaten des Phosphors.

Bevorzugt werden Derivate (z.B. Ester) von Säuren des Phosphors und deren Salze, wobei Säuren des Phosphors, Phosphorsäure, Phosphonsäure, Phosphinsäure, phosphorige Säure, auch jeweils in dehydratisierter Form einschließt, Salze bevorzugt Alkali-, Erdalkali- und Ammoniumsalze dieser Säuren sind und auch deren Derivate (beispielsweise teilveresterter Säuren) eingeschlossen sind.

Besonders bevorzugte Phosphorverbindungen sind solche der Formel (III)

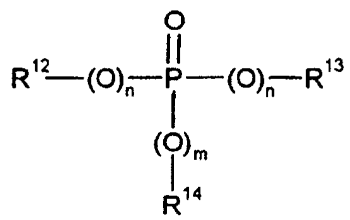

(III),

in denen

$R^{12}$, $R^{13}$ und $R^{14}$ unabhängig voneinander ein gegebenenfalls halogeniertes $C_1$-$C_8$-Alkyl oder ein gegebenenfalls halogniertes und/oder alkyliertes $C_5$- oder $C_6$-Cycloalkyl oder ein gegebenenfalls halogeniertes und/oder alkyliertes und/oder aralkyliertes $C_6$-$C_{30}$-Aryl

und

n und m unabhängig voneinander 0 oder 1 sind.

Diese Phosphorverbindungen sind generell bekannt (siehe beispielsweise Ullmann, Enzyklopädie der technischen Chemie, Band 18, Seiten 301 ff, 1979). Die aralkylierten Phosphorverbindungen sind beispielsweise in der DE-OS 38 24 356 0 beschrieben.

Gegebenenfalls halognierte $C_1$-$C_8$-Alkylreste gemäß Verbindungen der Formel (III) und (IV) können einfach oder mehrfach halogeniert, linear oder verzweigt sein. Beispiele für Alkylreste sind Chlorethyl, 2-Chlorpropyl, 2,3-Dibrompropyl, Butyl, Methyl oder Octyl.

Gegebenenfalls halogenierte und/oder alkylierte $C_5$- oder $C_6$-Cycloalkyle gemäß Verbindungen der Formel (III) und/oder (IV) sind gegebenenfalls einfach bis mehrfach halognierte und/oder alkylierte $C_5$- oder $C_6$-Cycloalkyle, also z.B. Cyclopentyl, Cyclohexyl, 3,3,33,3,3-Trimethylcyclohexyl und vollchloriertes Cyclohexyl.

Gegebenenfalls halogenierte und/oder alkylierte und/oder aralkylierte $C_6$-$C_{30}$-Arylreste gemäß Verbindungen der Formel (III) sind gegebenenfalls ein oder mehrkernig, einfach oder mehrfach halogeniert und/oder alkyliert und/oder aralkyliert, z.B. Chlorphenyl, Bromphenyl, Pentachlorphenyl, Pentabromphenyl, Phenyl, Kresyl, Isopropylphenyl, benzylsubtituiertes Phenyl und Naphthyl.

Erfindungsgemäß einsetzbare Phosphorverbindungen der Formel (III) sind z.B. Tributylphosphat, Tris-(2-chlorethyl)phosphat, Tris-(2,3-dibrompropyl)phosphat, Triphenylphosphat, Trikresylphosphat, Diphenylkresylphosphat, Diphenyloctylphosphat, Diphenyl-2-ethylkresylphosphat, Tri-(isopropyl-phenyl)phosphat, Tris-(p-benzylphenyl)phosphat, Triphenylphosphinoxid, Methanposphonsäuredimethylester, Methanphosphonsäurediphenylester und Phenylphosphonsäurediethylester.

Geeignete Flammschutzmittel sind weiterhin oligomere Phosphorverbindungen der Formel (IV). Das Molekulargewicht der Phosphorverbindungen der Formel (IV) ist im allgemeinen kleiner 2000 g/Mol, vorzugsweise kleiner 1000 g/Mol. Diese sind beispielsweise in der EP-A 0 363 608 beschrieben.

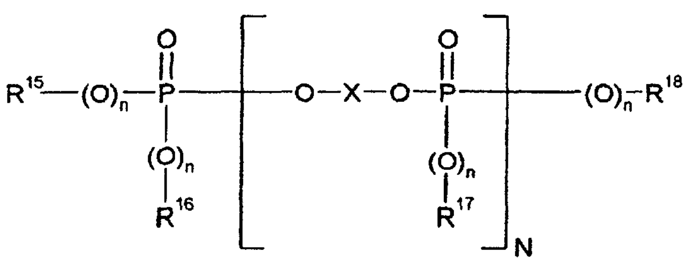

(IV),

worin

$R^{15}$, $R^{16}$, $R^{17}$, $R^{18}$ unabhängig voneinander $C_1$-$C_8$-Alkyl, vorzugsweise Methyl, $C_5$-$C_6$-Cycloalkyl, $C_6$-$C_{10}$-Aryl, vorzugsweise Phenyl, $C_7$-$C_{12}$-Aralkyl, vorzugsweise Phenyl-$C_1$-$C_4$-alkyl,

n unabhängig voneinander 0 oder 1,

N 1 bis 5 und

X einen ein- oder mehrkernigen aromatischen Rest mit 6 bis 30 C-Atomen bedeuten; vorzugsweise abgeleitet von Bisphenol A, Hydrochinon oder Resorcin.

Bei Mischungen mehrerer Phosphate der Formel (IV) stellt N einen Mittelwert zwischen 1 und 5 dar.

Bevorzugte Flammschutzmittel sind auch Mischungen aus Phosphorverbindungen der Formel (III) und Phosphorverbindungen der Formel (IV).

Beispiele für Gleitmittel sind Kohlenwasserstoffe ( z.B. Paraffinöle, Polyethylenwachse), Alkohole (z.B. Stearylalkohol), Carbonsäuren (z.B. Laurinsäure, Palmitinsäure, Stearinsäure), Carbonsäureamide (Stearinsäureamid, Ethylendiaminbisstearylamid), Carbonsäureester (z.B. n-Butylstearat, Stearylstearat, Glycerinmonostearat, Glycerintristearat, Pentaerythrittetrastearat); bevorzugte Gleitmittel sind Carbonsäureamide und Carbonsäureester.

Beispiele fiir Antistatika sind kationaktive Verbindungen (z.B. quartäre Ammonium-, Phosphonium- oder Sulfoniumsalze), anionaktive Verbindungen (z.B. Alkylsulfonate, Alkylsulfate, Alkylphosphate, Carboxylate in Form von Alkali- oder Erdalkalimetallsalzen), nichtionogene Verbindungen (z.B. Polyethylenglykolester, Polyethylenglykolether, Fettsäureester, ethoxylierte Fettamine); bevorzugte Antistatika sind nichtionogene Verbindungen.

Beispiele für Entformungsmittel sind Calciumstearat, Zinkstearat, Pentaerithrit-tetrastearat; bevorzugtes Entformungsmittel ist Pentaerithrittetrastearat.

Bei bestimmten Anforderungen bezüglich Flammschutz können die Polycarbonat/Pfropfpolymerisat-Formmassen fluorierte Polyolefine enthalten. Diese sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser $d_{50}$ von 0,05 bis 1000, vorzugsweise 0,08 bis 20 µm. Im allgemeinen haben die fluorierten Polyolefine eine Dichte von 1,2 bis 2,3 g/cm$^3$. Bevorzugte fluorierte Polyolefine sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl und Related Polymer" von Schildknecht, John Wiley & Sons, Inc., New York, 1962, Seite 484 - 494; "Fluorpolymers" von Wall, Wiley-Interscience, John Wiley & Sons, Inc., New York, Band 13, 1970, Seite 623 - 654; "Modern Plastics Encyclopedia", 1970 - 1971, Band 47, Nr. 10 A, Oktober 1970, Mc Graw-Hill, Inc., New York, Seite 134 und 774; "Modern Plastics Encyclopedia", 1975 - 1976, Oktober 1975, Band 52, Nr. 10 A, Mc Graw-Hill, Inc., New York, Seite 27, 28 und 472 und US-PS 3 671 487, 3 723 373 und 3 838 092).

Neben den genannten Additiven können die erfindungsgemäßen Formmassen weiterhin Stabilisatoren, Pigmente, Füllstoffe und Verstärkungsstoffe enthalten. Bevorzugte Füllstoffe sind Glaskugeln, Glimmer, Silikate, Quarz, Talkum, Titandioxid oder Wollastonit. Bevorzugt Verstärkungsstoffe sind Glas- oder Kohlefasern.

Die erfindungsgemäßen Formmassen, enthaltend die Komponenten A) bis D) und gegebenenfalls weitere bekannte Zusätze wie Stabilisatoren, Farbstoffe, Pigmente, Füll- und Verstärkungsstoffe und/oder Nukleiermittel, werden hergestellt, indem man die jeweiligen Bestandteile in bekannter Weise vermischt und bei Temperaturen von 200°C bis 330°C in üblichen Aggregaten wie Innenknetern, Extrudern und Doppelwellen-schnecken schmelzcompoundiert oder schmelzextrudiert.

Gegenstand der vorliegenden Erfindung ist somit auch ein Verfahren zur Herstellung von thermoplastischen Formmassen, enthaltend die Komponenten A) bis D) sowie gegebenenfalls Stabilisatoren, Farbstoffe, Pigmente, Füll- und Verstärkungsstoffe und/oder Nukleiermittel, das dadurch gekennzeichnet ist, daß man die Komponenten A) bis D) sowie gegebenenfalls Stabilisatoren, Farbstoffe, Pigmente, Fließmittel, Füllund Verstärkungsstoffe und/oder Nukleiermitteln nach erfolgter Vermischung bei Temperaturen von 200 bis 330°C in gebräuchlichen Aggregaten schmelzcompoundiert oder schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele fiir herstellbare Formkörper sind: Gehäuseteile jeder Art, z.B. für Haushaltsgeräte, wie Saftpressen, Kaffeemaschinen, Mixer, fiir Büromaschinen, oder Abdeckplatten für Bausektor und Teile fiir den Kfz-Sektor. Sie werden außerdem auf dem Gebiet der Elektrotechnik eingesetzt, weil sie sehr gute elektrische Eigenschaften haben.

Besonders geeignet sind die Formmassen zur Herstellung von dünnwandigen Formteilen (z.B. Datentechnik-Gehäuseteile), wo besonders hohe Ansprüche an Kerbschlagzähigkeit und Spannungsrißbeständigkeit der eingesetzten Kunststoffe gestellt werden.

Eine weitere Form der Verarbeitung ist die Herstellung von Formkörpern durch Blasformen oder durch Tiefziehen aus vorher hergestellten Platten oder Folien.

**Beispiele**

Eingesetzte Komponenten

| | |
|---|---|
| A1: | Polycarbonat auf Basis Bisphenol A mit einer relativen Lösungsviskosität von 1,26 bis 1,28 gemessen in Methylenchlorid bei 25°C und einer Konzentration von 0,5 g/100 ml |
| A2: | Polycarbonat auf Basis Bisphenol A mit einer relativen Lösungsviskosität von 1,20 gemessen in Methylenchlorid bei 25°C und einer Konzentration von 0,5 g/100 ml |
| B1: | Styrol/Acrylnitril = 72:28-Copolymerisat mit einem mittleren Molekulargewicht $M_w \approx 81\,000$, hergestellt nach peroxidischer Massepolymerisation mit Di-tert.-butylperoxid bei 150°C Oligomerengehalt: 0,50 Gew.-% |
| BV (Vergleichsmaterial): | Styrol/Acrylnitril = 72:28-Copolymerisat mit einem mittleren Molekulargewicht $M_w \approx 85\,000$, hergestellt nach thermischer Massepolymerisation bei 165°C Oligomerengehalt: 1,83 Gew.-% |
| C1: | Pfropfpolymerisat erhalten durch Emulsionspolymerisation von 40 Gew.-Teilen eines Monomerengemisches aus Styrol und Acrylnitril (Gew.-Verhältnis 73:27) in Gegenwart von 60 Gew.-Teilen (gerechnet als Feststoff) eines Polybutadienlatex mit einer mittleren Teilchengröße ($d_{50}$) von ca. 280 nm, Koagulation mit einem Magnesiumsulfat/Essigsäure-Gemisch und Trocknen des Polymerpulvers, |
| C2: | Pfropfpolymerisat erhalten durch Emulsionspolymerisation von 45 Gew.-Teilen eines Monomerengemisches aus Styrol und Acrylnitril (Gew.-Verhältnis 72:28) in Gegenwart von 55 Gew.-Teilen (gerechnet als Feststoff) eines Polybutadienlatex mit einer mittleren Teilchengröße ($d_{50}$) von ca. 400 nm, Koagulation mit einem Magnesiumsulfat/Essigsäure-Gemisch -Gemisch und Trocknen des Polymerpulvers, |
| D1: | Flammschutzmittel: Triphenylphosphat, Disflamoll® TP der Bayer AG, Leverkusen, Deutschland |
| D2: | Flammschutzmittel: Resorcin-oligophosphat, Fyrolflex® RDP der AKZO Nobel Chemicals GmbH, Düren, Deutschland |
| D3: | Entformungsmittel: Pentaerithrittetrastearat |

Fluoriertes Polyolefin: Das Tetrafluorethylenpolymerisat wird als koagulierte Mischung aus einer Pfropfpolymerisat-Emulsion gemäß C.2) in Wasser und einer Tetrafluorethylenpolymerisat-Emulsion in Wasser eingesetzt. Das Gewichtsverhältnis Pfropfpolymerisat C.2) zum Tetrafluorethylenpolymerisat in der Mischung ist 90 Gew.-% zu 10 Gew.-%. Die Tetrafluoethylenpolymerisat-Emulsion -Emulsion besitzt einen Feststoffgehalt von 60 Gew.-%, die Teilchengröße liegt zwischen 50 und 500 nm. Die Pfropfpolymerisat-Emulsion besitzt einen Feststoffgehalt von 34 Gew.-% und eine mittlere Latexteilchengröße von 400 nm.

Die oben beschriebenen Komponenten werden in den in Tabelle 1 angegebenen Mengen in einem Innenkneter bei ca. 200°C bis 220°C homogen vermischt und anschließend in Granulatform überführt.

Dieses Material wird unter Verwendung eines speziellen Heißkanalwerkzeugs (siehe Fig. 1) unter den nachstehenden Bedingungen verarbeitet.

Nach 350 Schuß wird die Scheibe entnommen und die Belagsmenge ermittelt (siehe Tabelle 1, vorletzte Spalte).

Zusätzlich wird der Masseverlust der Formmassen bei 280°C thermogravimetrisch unter folgenden Meßbedingungen bestimmt:

| | |
|---|---|
| Methode | Dynamische Thermogravimetrie |

(fortgesetzt)

| | |
|---|---|
| Gerät | Mettler TA 3000 |
| Heizrate | 10 K/min |
| Meßbereich | 0-400°C |
| Bedingungen | Stickstoff als Inertgas |

Aus den Ergebnissen ist ersichtlich, daß die erfindungsgemäßen Polycarbonat-ABS-Formmassen in der thermogravimetrischen Analyse einen deutlich geringeren Masseverlust bei 280°C und eine deutlich reduzierte Belagsbildung als die Vergleichsbeispiele aufweisen.

**Verarbeitungsbedingungen:**

| | | |
|---|---|---|
| Spritzgießmaschine | Klöckner-Ferromatik-FM 60, vollgeregelt | |
| | Schneckendurchmesser | 25 mm |
| | Schließkraft | 600 kN |
| | max. Schußgewicht | 45 g |
| | max. Einspritzdruck | 3000 bar |
| Werkzeug | Rundscheibe mit 118 mm Durchmesser, Dicke 2 bis 4 mm, bevorzugt 2 mm, mit Heißkanal (Fig. 1), 6 auswechselbare Begrenzungsscheiben, 2-fach Punktanguß (je 0,1 bis 2 mm, bevorzugt je 0,8 mm Durchmesser) mit Zusammenfließnaht und Luftauswerfer, 1,5 mm Wandstärke (variabel), Schußgewicht 20 g (Platte 15 g, Anguß 5 g) | |
| Spritzgießparameter | Massetemperatur | 240°C |
| | Werkzeugtemperatur | 28°C |
| | Schneckenvorlaufgeschwindigkeit | 100 mm/s |
| | Einspritzzeit | 0,5 s |
| | mittlere Verweilzeit | 143 s |
| | Gesamtzyklus | 35,5 s |
| | (Nachdruckzeit 12 s, Kühlzeit 18 s, Pausenzeit 1 s) | |

Zur Messung der beim Spritzgießen dieser PC/ABS-Formmassen sich im Werkzeug bildenden Beläge wurde ein spezielles Werkzeug (Fig. 1) verwendet. In diesem Werkzeug wurden über zwei Anschnitte 1 (Durchmesser 0,8 mm) eine Rundscheibe 7 (Durchmesser 118 mm; Dicke 2 mm) im Spritzgießverfahren entsprechend der angegebenen Verarbeitungsbedingungen hergestellt. Beim Einströmen der heißen Masse (240°C) in die Kavität 2 bilden sich Beläge 4 der die flüchtigen Bestandteile an den kreisförmigen Fließlinien 5 der Formmasse, die sich in der Mitte der Kavität 2 treffen. Der Spritzgießvorgang wird nach der Berührung dieser Fließlinien so gestoppt, daß ein dreieckähnlicher Raum 6 für die Belagbeurteilung verbleibt (Fig. 2). Dieser Vorgang entspricht 80 % des gesamten Dosierweges. Die Messung der Belagsmengen erfolgt in der Weise, dass die auswechselbare Begrenzungsscheibe 3 nach jeweils 350 Schüssen aus dem Werkzeug genommen und ihre Gewichtszunahme bestimmt wurde (Fig. 2). Zusätzliche Gewichtskontrolle wurde durch die Abnahme des Belages mittels einer Rasierklinge durchgeführt.

**Tabelle 1**: Zusammensetzungen der Formmassen und resultierende Belagsbildung
(Angaben in Gew.-Teilen)

| Beispiel | A1 | A2 | B1 | BV | C1 | C2 | D1 | D2 | D3 | fluoriertes Polyolefin | Belagsmenge (mg) | Masseverlust bei 280 °C (%) |
|---|---|---|---|---|---|---|---|---|---|---|---|---|
| Vgl. 1 | 50 | 20 | - | 8 | - | 7,5 | - | 11 | - | 4 | 10 | 0,8 |
| 2 | 50 | 20 | 8 | - | - | 7,5 | - | 11 | - | 4 | 7 | 0,5 |
| Vgl. 3 | 50 | 20 | - | 8 | - | 7,5 | 3 | 8 | - | 4 | 16 | 1,5 |
| 4 | 50 | 20 | 8 | - | - | 7,5 | 3 | 8 | - | 4 | 11 | 1,3 |
| | | | | | | | | | | | | |
| Vgl. 5 | 70 | - | - | 7 | 7,5 | - | 12 | - | 1 | 4 | 55 | 4,7 |
| 6 | 70 | - | 7 | - | 7,5 | - | 12 | - | 1 | 4 | 30 | 3,8 |
| | | | | | | | | | | | | |
| Vgl. 7 | 60 | - | - | 20 | 20 | - | - | - | 1 | - | 10 | 1,0 |
| 8 | 60 | - | 20 | - | 20 | - | - | - | 1 | - | 6 | 0,8 |

## Patentansprüche

1. Thermoplastische Polycarbonat/Pfropfpolymerisat-Formmassen -Formmassen enthaltend

    A) 5 bis 95 Gew.-Teile eines aromatischen Polycarbonats,

    B) 1 bis 50 Gew.-Teile mindestens eines thermoplastischen Homo-, Co- oder Terpolymerisats von Styrol, α-Methylstyrol, Acrylnitril, N-substituiertem Maleinimid oder Mischungen daraus,

    C) 1 bis 50 Gew.-Teile mindestens eines Pfropfpolymerisats von

        C.1) 5 bis 90 Gew.-Teilen Styrol, α-Methylstyrol, Acrylnitril, N-substituiertem Maleinimid oder Mischungen daraus auf

        C.2) 95 bis 10 Gew.-Teile eines Kautschuks mit einer Glasübergangstemperatur ≤ 0°C

    und

    D) 1 bis 25 Gew.-Teile (pro 100 Gew.-Teile A + B+C) mindestens eines Additivs ausgewählt aus der Gruppe der Flammschutzmittel, Gleitmittel, Antistatikum, Entformungsmittel oder Mischungen daraus,

    **dadurch gekennzeichnet, daß** die Komponente B) durch Masse-, Lösungs- oder Suspensionspolymerisation hergestellt wird und einen Oligomerengehalt (Dimere, Trimere, Tetramere) ≤ 1 Gew.-%, aufweist, Komponente C) durch Emulsionspolymerisation hergestellt wird und der Gesamtoligomerengehalt der Formmassen ≤ 0,6 Gew.-% ist.

2. Thermoplastische Polycarbonat-ABS-Formmassen gemäß Anspruch 1 enthaltend

    A) 10 bis 90 Gew.-Teile eines aromatischen Polycarbonats,

    B) 1 bis 40 Gew.-Teile mindestens eines thermoplastischen Homo-, Cooder Terpolymerisats von Styrol, α-Methylstyrol, Acrylnitril, N-substituiertem Maleinimid oder Mischungen daraus,

    C) 2 bis 40 Gew.-Teile mindestens eines Pfropfpolymerisats von

        C.1) 30 bis 80 Gew.-Teile Styrol, α-Methylstyrol, Acrylnitril, N-substituiertem Maleinimid oder Mischungen daraus auf

        C.2) 70 bis 20 Gew.-Teile eines Kautschuks mit einer Glasübergangstemperatur ≤ 0°C und

    D) 2 bis 20 Gew.-Teile (pro 100 Gew.-Teile A + B+C) mindestens eines Additivs ausgewählt aus der Gruppe der Flammschutzmittel, Gleitmittel, Antistatikum, Entformungsmittel oder Mischungen daraus,

    **dadurch gekennzeichnet, daß** die Komponente B) durch Masse-, Lösungs- oder Suspensionspolymerisation hergestellt wird und einen Oligomerengehalt (Dimere, Trimere, Tetramere) ≤ 0,75 Gew.-%, aufweist, Komponente C) durch Emulsionspolymerisation hergestellt wird und der Gesamtoligomerengehalt der Formmassen ≤ 0,4 Gew.-% ist.

3. Thermoplastische Formmassen gemäß Anspruch 1, **dadurch gekennzeichnet**, das als Komponente B) Copolymerisate aus Styrol, α-Methylstyrol, Acrylnitril, N-substituiertem Maleinimid oder Mischungen daraus verwendet werden.

4. Formmassen gemäß Anspruch 1, **dadurch gekennzeichnet, daß** der Kautschuk ein Dienkautschuk, Acrylatkautschuk, Silikonkautschuk oder Ethylen-Propylen-Dien-Kautschuk ist.

5. Thermoplastische Formmasse nach Anspruch 1 enthaltend als D) ein halogenfreies Flammschutzmittel.

6. Thermoplastische Formmasse nach Anspruch 1 enthaltend als Flammschutzmittel D) Phosphorverbindungen der

Formel (III)

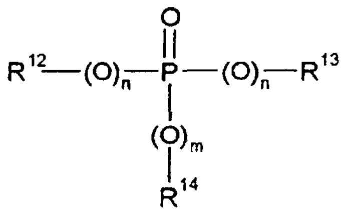

(III),

in denen

$R^{12}$, $R^{13}$ und $R^{14}$ unabhängig voneinander $C_1$-$C_8$-Alkyl oder gegebenenfalls halogniertes $C_5$- oder $C_6$-Cycloalkyl oder gegebenenfalls alkyliertes oder aralkyliertes $C_6$-$C_{30}$-Aryl bedeuten

und n und m unabhängig voneinander 0 oder 1 bedeuten.

**7.** Formmassen gemäß Anspruch 1 und 2, enthaltend als D) Phosphorverbindungen der Formel (IV)

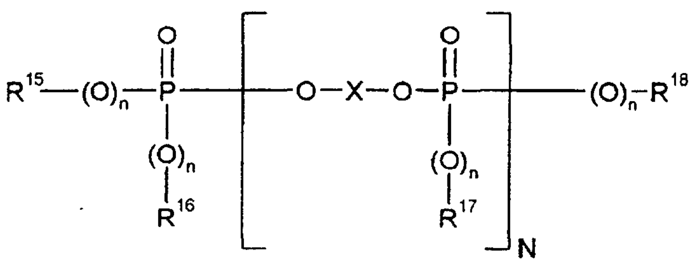

(IV),

worin

| | |
|---|---|
| $R^{15}$, $R^{16}$, $R^{17}$, $R^{18}$ | unabhängig voneinander $C_1$-$C_8$-Alkyl, $C_5$-$C_6$-Cycloalkyl, $C_6$-$C_{10}$-Aryl oder $C_7$-$C_{12}$-Aralkyl, |
| n | unabhängig voneinander 0 oder 1, |
| N | eine Zahl von 1 bis 5 und bei Mischungen einen Mittelwert zwischen 1 und 5, |
| X | einen ein- oder mehrkernigen aromatischen Rest mit 6 bis 30 C-Atomen, |

bedeuten.

**8.** Formmassen gemäß Anspruch 6 enthaltend als Komponente D) Triphenylphosphat.

**9.** Formmassen gemäß Anspruch 6 und 7 enthaltend als Komponente D) Mischungen aus Phosphorverbindungen der Formel (III) und aus Phosphorverbindungen der Formel (IV).

**10.** Verwendung der thermoplastischen Formmassen gemäß Anspruch 1 zur Herstellung von Formteilen durch Spritzgießen.

**11.** Verwendung der thermoplastischen Formmassen gemäß Anspruch 1 bis 9 zur Herstellung von Hochglanz-Formteilen.

## Claims

1. Thermoplastic polycarbonate/graft polymer moulding compositions containing

A) 5 to 95 parts by weight of an aromatic polycarbonate,

B) 1 to 50 parts by weight of at least one thermoplastic homopolymer, copolymer or terpolymer of styrene, α-methylstyrene, acrylonitrile, N-substituted maleimide or mixtures thereof,

C) 1 to 50 parts by weight of at least one graft polymer of

C.1) 5 to 90 parts by weight of styrene, α-methylstyrene, acrylonitrile, N-substituted maleimide or mixtures thereof, on

C.2) 95 to 10 parts by weight of a rubber with a glass transition temperature ≤ 0°C

and

D) 1 to 25 parts by weight (per 100 parts by weight A+B+C) pf at least one additive selected from the group of flame retardants, lubricants, antistatic agent, mould release agents or mixtures thereof,

**characterised in that** the component B) is produced by bulk, solution or suspension polymerisation and has an oligomer content (dimers, trimers, tetramers) < 1 wt.%, component C) is produced by emulsion polymerisation and the total oligomer content of the moulding compositions is ≤ 0.6 wt.%.

2. Thermoplastic polycarbonate-ABS moulding compositions according to claim 1, containing

A) 10 to 90 parts by weight of an aromatic polycarbonate,

B) 1 to 40 parts by weight of at least one thermoplastic homopolymer, copolymer or terpolymer of styrene, α-methylstyrene, acrylonitrile, N-substituted maleimide or mixtures thereof,

C) 2 to 40 parts by weight of at least one graft polymer of

C.1) 30 to 80 parts by weight of styrene, α-methylstyrene, acrylonitrile, N-substituted maleimide or mixtures thereof, on

C.2) 70 to 20 parts by weight of a rubber with a glass transition temperature ≤ 0°C and

D) 2 to 20 parts by weight (per 100 parts by weight A+B+C) of at least one additive selected from the group of flame retardants, lubricants, antistatic agent, mould release agents or mixtures thereof,

**characterised in that** the component B) is produced by bulk, solution or suspension polymerisation and has an oligomer content (dimers, trimers, tetramers) < 0.75 wt.%, component C) is produced by emulsion polymerisation and the total oligomer content of the moulding compositions is ≤ 0.4 wt.%.

3. Thermoplastic moulding compositions according to claim 1, **characterised in that** copolymers of styrene, α-methylstyrene, acrylonitrile, N-substituted maleimide or mixtures thereof are used as component B).

4. Moulding compositions according to claim 1, **characterised in that** the rubber is a diene rubber, acrylate rubber, silicone rubber or ethylene-propylene-diene rubber.

5. Thermoplastic moulding composition according to claim 1 containing as D) a halogen-free flame retardant.

6. Thermoplastic moulding composition according to claim 1 containing as flame retardant D) phosphorus compounds of formula (III)

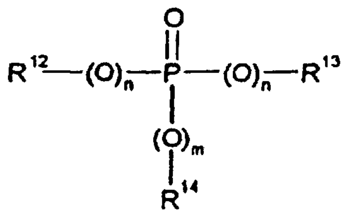

(III),

wherein

$R^{12}$, $R^{13}$ and $R^{14}$, independently of one another, are $C_1$-$C_8$ alkyl or optionally halogenated $C_5$ or $C_6$ cycloalkyl or optionally alkylated or aralkylated $C_6$-$C_{30}$ aryl,

and n and m, independently of one another, are 0 or 1.

**7.** Moulding compositions according to claim 1 or 2, containing as D) phosphorus compounds of formula (IV)

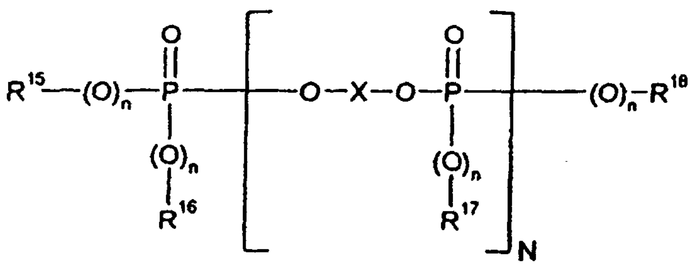

(IV),

wherein

$R^{15}$, $R^{16}$, $R^{17}$, $R^{18}$, independently of one another, denote $C_1$-$C_8$ alkyl, $C_5$-$C_6$ cycloallcyl, $C_6$-$C_{10}$ aryl or $C_7$-$C_{12}$ aralkyl,

n denotes, independently, 0 or 1

N denotes a number from 1 to 5 or, in the case of mixtures, an average value between 1 and 5

X denotes a mono- or polynuclear aromatic group with 6 to 30 C atoms.

**8.** Moulding compositions according to claim 6, containing triphenyl phosphate as component D).

**9.** Moulding compositions according to claims 6 or 7 containing mixtures of phosphorus compounds of formula (III) and of phosphorus compounds of formula (IV) as component D).

**10.** Use of the thermoplastic moulding compositions according to claim 1 for the production of mouldings by injection moulding.

**11.** Use of the thermoplastic moulding compositions according to claims 1 to 9 for the production of high-gloss mouldings.

**Revendications**

**1.** Matières à mouler thermoplastiques à base de polycarbonate/polymère greffé contenant

A) 5 à 95 parties en poids d'un polycarbonate aromatique,

B) 1 à 50 parties en poids d'au moins un homopolymère, copolymère ou terpolymère thermoplastique du styrène, de l'α-méthylstyrène, de l'acrylonitrile, de l'imide maléique substitué sur l'azote ou de mélanges de ceux-ci,

C) 1 à 50 parties en poids d'au moins un polymère greffé de

C.1) 5 à 90 parties en poids de styrène, d'α-méthylstyrène, d'acrylonitrile, d'imide maléique substitué sur l'azote ou de mélanges de ceux-ci sur

C.2) 95 à 10 parties en poids d'un caoutchouc avec une température de transition vitreuse $< 0°C$

et

D) 1 à 25 parties en poids (par 100 parties en poids de A + B + C) d'au moins un additif sélectionné dans le groupe des agents ignifuges, des agents lubrifiants, des agents antistatiques, des agents de démoulage ou de mélanges de ceux-ci,

**caractérisé en ce que** le composant B) est fabriqué par polymérisation en masse, en solution ou en suspension et présente une teneur en oligomères (dimères, trimères, tétramères) ≤ 1 % en poids, le composant C) est fabriqué par polymérisation en émulsion et la teneur totale en oligomères des matières à mouler est ≤ 0,6 % en poids.

**2.** Matières à mouler thermoplastiques polycarbonate-ABS suivant la revendication 1 contenant

A) 10 à 90 parties en poids d'un polycarbonate aromatique,

B) 1 à 40 parties en poids d'au moins un homopolymère, copolymère ou terpolymère thermoplastique du styrène, de l'α-méthylstyrène, de l'acrylonitrile, de l'imide maléique substitué sur l'azote ou de mélanges de ceux-ci,

C) 2 à 40 parties en poids d'au moins un polymère greffé de

C.1) 30 à 80 parties en poids de styrène, d'α-méthylstyrène, d'acrylonitrile, d'imide maléique substitué sur l'azote ou de mélanges de ceux-ci sur
C.2) 70 à 20 parties en poids d'un caoutchouc avec une température de transition vitreuse ≤ 0°C et

D) 2 à 20 parties en poids (par 100 parties en poids de A + B + C) d'au moins un additif sélectionné dans le groupe des agents ignifuges, des agents lubrifiants, des agents antistatiques, des agents de démoulage ou de mélanges de ceux-ci,

**caractérisé en ce que** le composant B) est fabriqué par polymérisation en masse, en solution ou en suspension et présente une teneur en oligomères (dimères, trimères, tétramères) ≤ 0,75 % en poids, le composant C) est fabriqué par polymérisation en émulsion et la teneur totale en oligomères des matières à mouler est ≤ 0,4 % en poids.

**3.** Matières à mouler thermoplastiques suivant la revendication 1, **caractérisées en ce qu'**on utilise comme composant B) des copolymères de styrène, d'α-méthylstyrène, d'acrylonitrile, d'imide maléique substitué sur l'azote ou de mélanges de ceux-ci.

**4.** Matières à mouler thermoplastiques suivant la revendication 1, **caractérisées en ce que** le caoutchouc est un caoutchouc diénique, un caoutchouc d'acrylate, un caoutchouc silicone ou un caoutchouc éthylène-propylène-diène.

**5.** Matière à mouler thermoplastique suivant la revendication 1, contenant comme D) un agent ignifuge exempt d'halogènes.

**6.** Matière à mouler thermoplastique suivant la revendication 1, contenant comme agent ignifuge D) des composés phosphorés de la formule (III).

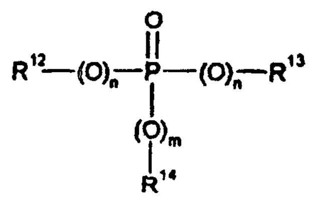

(III),

où

$R^{12}$, $R^{13}$ et $R^{14}$ sont indépendamment l'un de l'autre un alkyle en $C_1$-$C_8$ ou un cyclkoalkyle en $C_5$ ou $C_6$, le cas échéant halogéné, ou un aryle en $C_6$-$C_{30}$, le cas échéant alkylé et/ou aralkylé

et n et m sont indépendamment l'un de l'autre 0 ou 1.

**7.** Matières à mouler thermoplastiques suivant les revendications 1 et 2, contenant comme D) des composés phosphorés de la formule (IV)

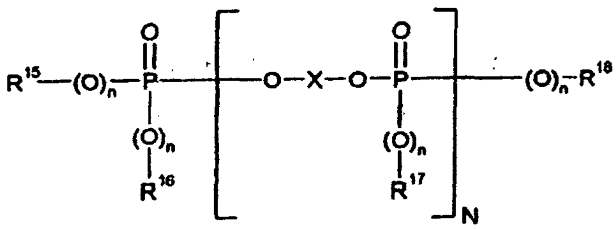

(IV),

où

$R^{15}$, $R^{16}$, $R^{17}$, $R^{18}$ sont indépendamment l'un de l'autre un alkyle en $C_1$-$C_8$, un cycloalkyle en $C_5$-$C_6$, un aryle en $C_6$-$C_{10}$ ou un aralkyle en $C_7$-$C_{12}$,

n indépendamment l'un de l'autre 0 ou 1,

N un nombre de 1 à 5 et pour les mélanges une valeur moyenne comprise entre 1 et 5,

X un reste aromatique à un ou plusieurs noyaux avec 6 à 30 atomes de C.

**8.** Matières à mouler suivant la revendication 6 contenant comme composant D) du triphénylphosphate.

**9.** Matières à mouler suivant les revendications 6 et 7 contenant comme composant D) des mélanges de composés phosphorés de la formule (III) et des composés phosphorés de la formule (IV).

**10.** Utilisation des matières à mouler thermoplastiques suivant la revendication 1 pour la fabrication de pièces moulées par moulage par injection.

**11.** Utilisation des matières à mouler thermoplastiques suivant les revendications 1 à 9 pour la fabrication de pièces moulées à grand brillant.

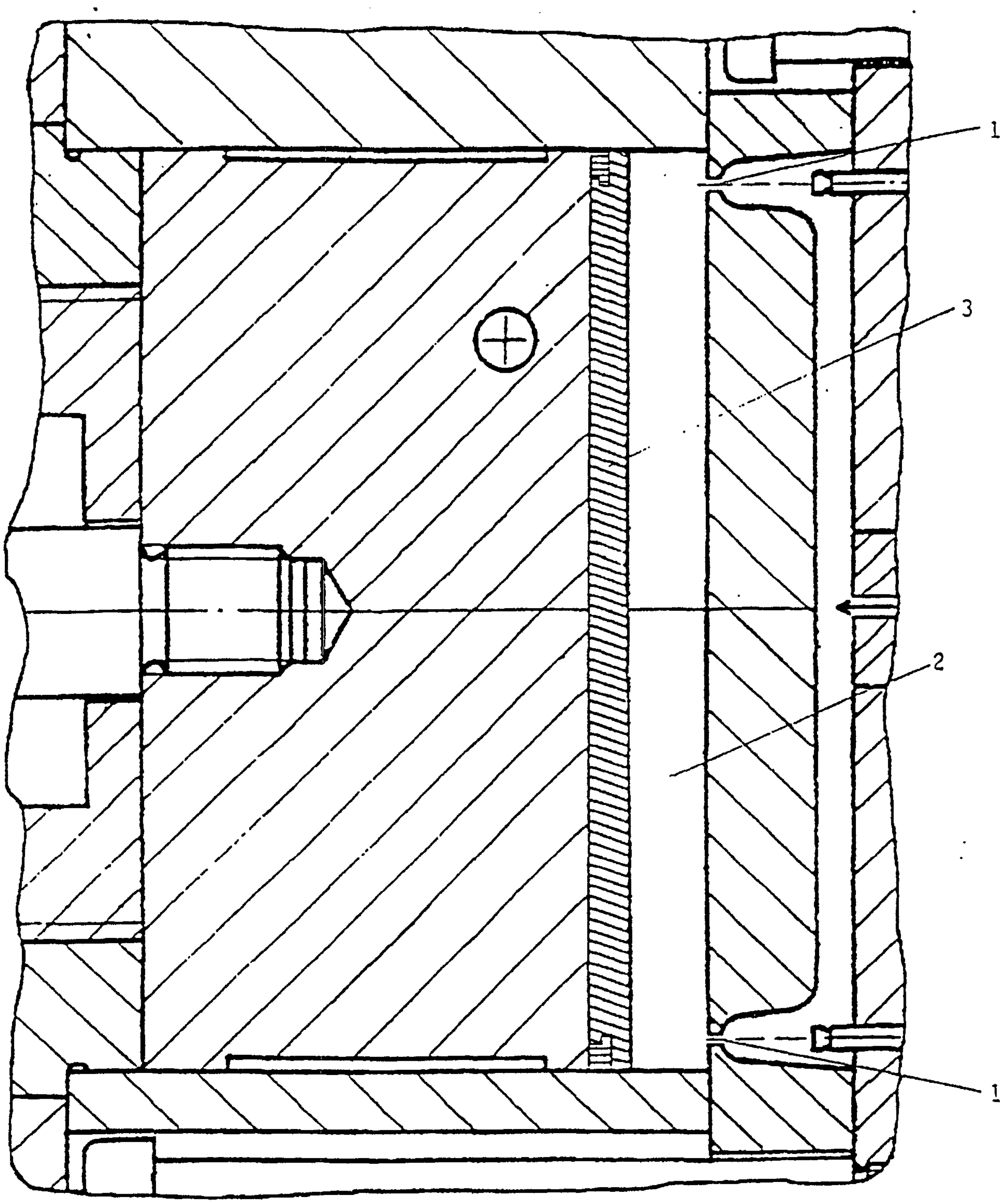


Fig. 1

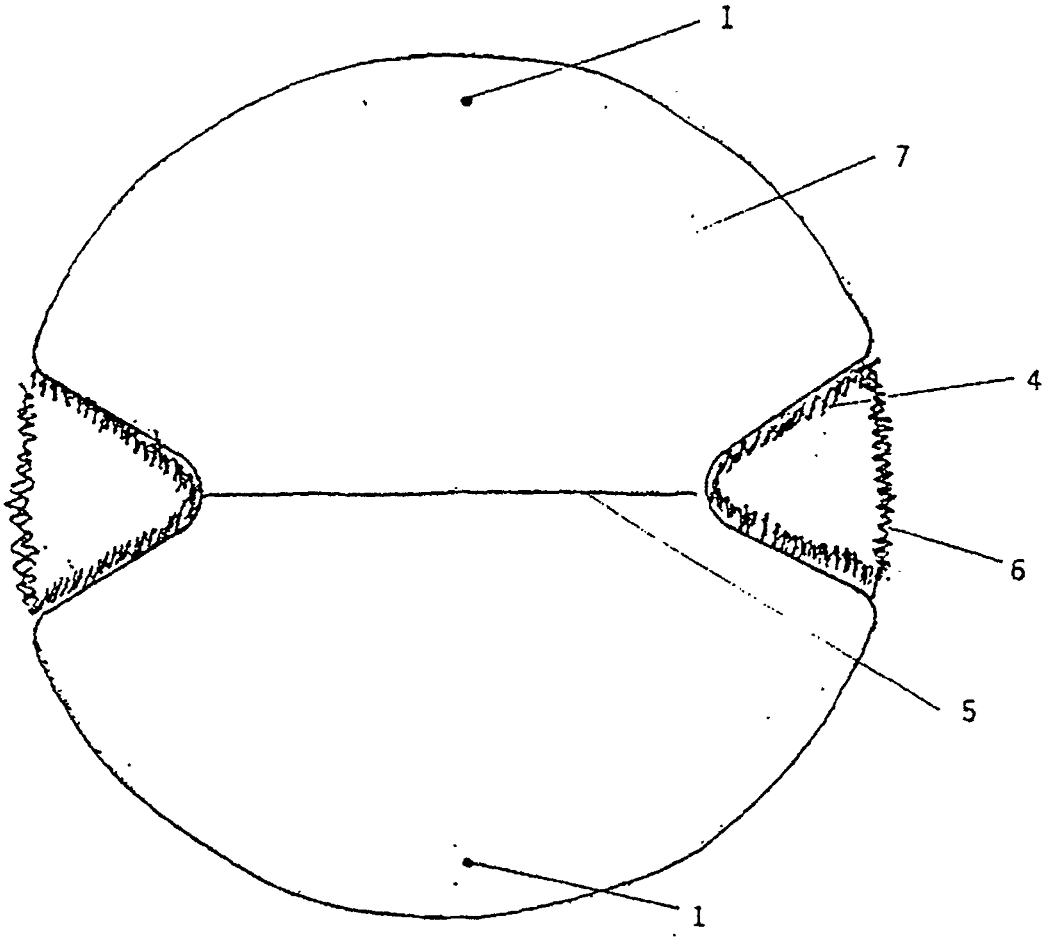


Fig. 2